(19) Europäisches Patentamt
European Patent Office
Office européen des brevets

(11) **EP 4 102 772 B1**

(12) **EUROPEAN PATENT SPECIFICATION**

(45) Date of publication and mention
of the grant of the patent:
**27.12.2023 Bulletin 2023/52**

(21) Application number: **22180684.7**

(22) Date of filing: **23.06.2022**

(51) International Patent Classification (IPC):
**H04L 9/40** *(2022.01)* **G06F 21/55** *(2013.01)*
**H04W 4/40** *(2018.01)*

(52) Cooperative Patent Classification (CPC):
**H04L 63/1416; G06F 21/554; H04L 63/1441;
H04L 63/1458;** H04L 63/1433; H04W 4/40

(54) **METHOD AND APPARATUS OF PROCESSING SECURITY INFORMATION, DEVICE AND STORAGE MEDIUM**

VERFAHREN UND GERÄT ZUR VERARBEITUNG VON SICHERHEITSINFORMATIONEN, VORRICHTUNG UND SPEICHERMEDIUM

PROCÉDÉ ET APPAREIL DE TRAITEMENT D'INFORMATIONS DE SÉCURITÉ, DISPOSITIF ET SUPPORT D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2021 CN 202110716015**

(43) Date of publication of application:
**14.12.2022 Bulletin 2022/50**

(73) Proprietor: **Apollo Intelligent Connectivity
(Beijing)
Technology Co., Ltd.
Beijing 100176 (CN)**

(72) Inventor: **WANG, Mingwei
Beijing, 100176 (CN)**

(74) Representative: **Carpmaels & Ransford LLP
One Southampton Row
London WC1B 5HA (GB)**

(56) References cited:
**EP-A2- 3 820 115**

• **WANG WENHAO ET AL: "Clustering Using a
Similarity Measure Approach Based on Semantic
Analysis of Adversary Behaviors", 2020 IEEE
FIFTH INTERNATIONAL CONFERENCE ON DATA
SCIENCE IN CYBERSPACE (DSC), IEEE, 27 July
2020 (2020-07-27), pages 1-7, XP033823771, DOI:
10.1109/DSC50466.2020.9194468 [retrieved on
2020-09-10]**

**Description**

TECHNICAL FIELD

The present disclosure relates to a field of computer technology, and in particular to a field of Internet of Vehicles and a field of information security technology.

BACKGROUND

With the comprehensive promotion of "Internet+", an application of information technology in the country's social and economic construction has become more and more extensive. Correspondingly, a new network security threat is more prominent, and a traditional network security defense system based on "protection" will face great challenges. Facing the new network security threat, the network security defense system will pay more attention to capabilities of monitoring and response of a network security in the future.

EP 3820115 A2 concerns on a method, apparatus, device, and storage medium for defending against attacks, which relate to the technical field of information security, and can be used in intelligent traffic or an autonomous driving scenario. The specific implementation solution is: acquiring an instruction set including at least one instruction for controlling vehicle state; comparing each instruction in the instruction set with at least one attack instruction in an attack behavior knowledge base respectively to determine a maximum similarity value corresponding to each instruction; and determining the type of the instruction and of the processing tactics for the instruction according to the maximum similarity value corresponding to each instruction and a preset similarity range. In this technical solution, since each attack instruction in the attack behavior knowledge base is acquired by performing attack analysis on a chained data set of at least one on-board component, contextual data of the source data are correlated in the process of generating the attack instruction, thereby improving both the accuracy of instruction type determination and of attack defense precision.

WAI\IG WENHAO ET AL: "Clustering Using a Similarity Measure Approach Based on Semantic Analysis of Adversary Behaviors", 2020 IEEE FIFTH INTERNATIONAL CONFERENCE ON OATA SCIENCE IN CYBERSPACE (OSC), IEEE, 27 July 2020 (2020-07-27) , pages 1-7, XP033823771, 001: 10.11 09/0SC50466.2020.9194468 [retrieved on 2020-09-10] concerns on clustering using a similarity measure approach based on semantic analysis of adversary behaviors. A three-layer model (Goal, Behavior , Capability) is proposed to study the statistical characteristics of APT groups. Based on the proposed model, we construct a knowledge network composed of adversary behaviors, and introduce a similarity measure approach to capture similarity degree by considering different semantic links between groups. After calculating similarity degrees, we take advantage of Girvan-Newman alogrithm to discover community groupts, clustering result shows that community structures and boundaries do exist by analyzing the behavior of APT groups.

SUMMARY

The present disclosure provides a method of processing security information as defined in claim 1, a device as defined in claim 6, and a storage medium as defined in claim 7.

According to an aspect of the present disclosure, a method of processing security information is provided, including standardizing a security alarm information for a target device to obtain standardization data; determining a similarity between the standardization data and attack data in an attack behavior knowledge base; and updating a security information of the target device according to the similarity.

According to another aspect of the present disclosure, an apparatus of processing security information is provided, including: a standardization module, configured to standardize a security alarm information for a target device to obtain standardization data; a similarity determination module, configured to determine a similarity between the standardization data and attack data in an attack behavior knowledge base; and an update module, configured to update a security information of the target device according to the similarity.

Another aspect of the present disclosure provides an electronic device, including: at least one processor; and a memory communicatively connected to the at least one processor, wherein the memory stores instructions executable by the at least one processor, and the instructions, when executed by the at least one processor, cause the at least one processor to execute the method shown in embodiments of the present disclosure.

According to another aspect of the embodiments of the present disclosure, a non-transitory computer-readable storage medium having computer instructions stored thereon is provided, wherein the computer instructions are configured to cause a computer to execute the method shown in the embodiments of the present disclosure.

According to another aspect of the embodiments of the present disclosure, a computer program product including a computer program, wherein the computer program, when executed by a processor, implements the method shown in the embodiments of the present disclosure.

It should be understood that content described in this section is not intended to identify key or important features in the embodiments of the present disclosure, nor is it intended to limit the scope of the present disclosure. Other features of the present disclosure will be easily understood through the following description.

BRIEF DESCRIPTION OF THE DRAWINGS

The accompanying drawings are configured to understand the present disclosure better and do not constitute a limitation to the present disclosure, in which:

FIG. 1 schematically shows an exemplary system architecture to which a method and an apparatus of processing security information may be applied according to the embodiments of the present disclosure;
FIG. 2 schematically shows a flowchart of a method of processing security information according to the embodiments of the present disclosure;
FIG. 3 schematically shows a flowchart of a method of determining a similarity between standardization data and attack data in an attack behavior knowledge base according to the embodiments of the present disclosure;
FIG. 4 schematically shows a schematic diagram of a method of processing security information according to the embodiments of the present disclosure;
FIG. 5 schematically shows a block diagram of an apparatus of processing security information according to the embodiments of the present disclosure; and
FIG. 6 schematically shows a schematic block diagram of an example electronic device that may be configured to implement the embodiments of the present disclosure.

DETAILED DESCRIPTION OF EMBODIMENTS

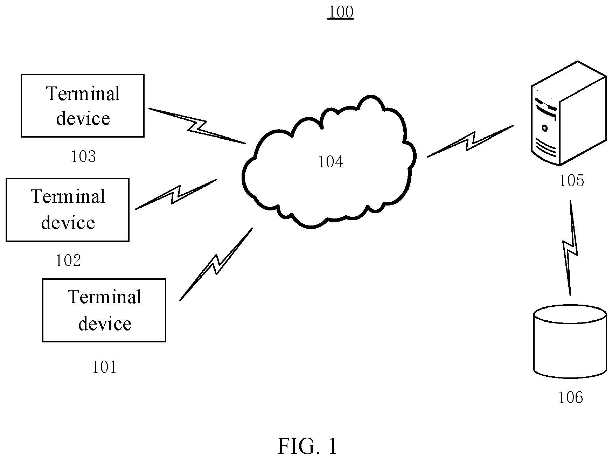

FIG. 1 schematically shows an exemplary system architecture 100 to which a method and an apparatus of processing security information may be applied according to the embodiments of the present disclosure. It should be noted that FIG. 1 is only an example of the system architecture to which the embodiments of the present disclosure may be applied, so as to help those skilled in the art to understand a technical content of the present disclosure, but it does not mean that the embodiments of the present disclosure may not be used for other devices, systems, environments or scenes.

As shown in FIG. 1, the system architecture 100 according to this embodiment may include terminal devices 101, 102, and 103, a network 104, a threat analysis platform 105 and an attack behavior knowledge base 106. The network 104 is a medium configured to provide a communication link between the terminal devices 101, 102, 103 and a cloud 105. The network 104 may include various connection types, such as a wired communication link, a wireless communication link, or an optic fiber cable, etc.

According to an embodiment of the present disclosure, when the terminal devices 101, 102, and 103 are under a network attack, the terminal devices 101, 102, and 103 generate corresponding security alarm information according to an attack behavior of the network attack. A security data probe may be deployed in the terminal devices 101, 102 and 103 for collecting the security alarm information of the terminal devices 101, 102 and 103, and reporting the security alarm information to the threat analysis platform 105 through the network 104.

The terminal devices 101, 102, and 103 may be various electronic devices that support a network communication, including but not limited to an intelligent vehicle-mounted system, a vehicle-mounted sensor, an intelligent transportation terminal device, etc.

The threat analysis platform 105 may be configured to process e.g. analyze data such as the received security alarm information, and feedback a processing result (e.g. an analysis result generated according to the security alarm information, etc.) to the terminal device.

The threat analysis platform 105 may be deployed in a server or a server cluster consisting of a plurality of servers. The server may be a cloud server, further known as a cloud computing server or a cloud host, which is a host product in a cloud computing service system, so as to solve existing defects of difficult management and weak business expansion in a traditional physical host and a virtual private server (VPS). The server may further be a server of a distributed system, or a server combined with a blockchain.

According to the embodiments of the present disclosure, the attack behavior knowledge base 106 may be established from an information of an attack behavior of an attacker observed and collected in a real world, and may be configured to reflect an attack life cycle of the attacker and techniques and means the attacker used. The attack behavior knowledge base 106 may be based on an adversarial tactics, techniques, and common knowledge (ATT&CK) model. The ATT&CK model has a low level of abstraction, may effectively help a user associate a tactical strategy and may more clearly reflect what life cycle a current attack is in.

It should be noted that, the method of processing security information provided by the embodiments of the present disclosure may be executed by the threat analysis platform 105. Correspondingly, the apparatus of processing security information provided by the embodiments of the present disclosure may be disposed in the threat analysis platform 105. The method of processing security information provided by the embodiments of the present disclosure may further be executed by a server or a server cluster different from the threat analysis platform 105 and capable of communicating with the terminal devices 101, 102, 103 and/or the threat analysis platform 105. Correspondingly, the apparatus of processing security information provided by the embodiments of the present disclosure may further be disposed in the server or the server cluster different from the threat analysis platform 105 and capable of communicating with the terminal devices 101, 102, 103 and/or the threat analysis platform 105.

It should be understood that the numbers of the terminal device, the network, the threat analysis platform and the attack behavior knowledge base in FIG. 1 are merely schematic. The number of the terminal device(s), the number of the network(s), number of the threat analysis platform(s) and the number of the attack behavior knowledge base(s) may be set as desired in practice.

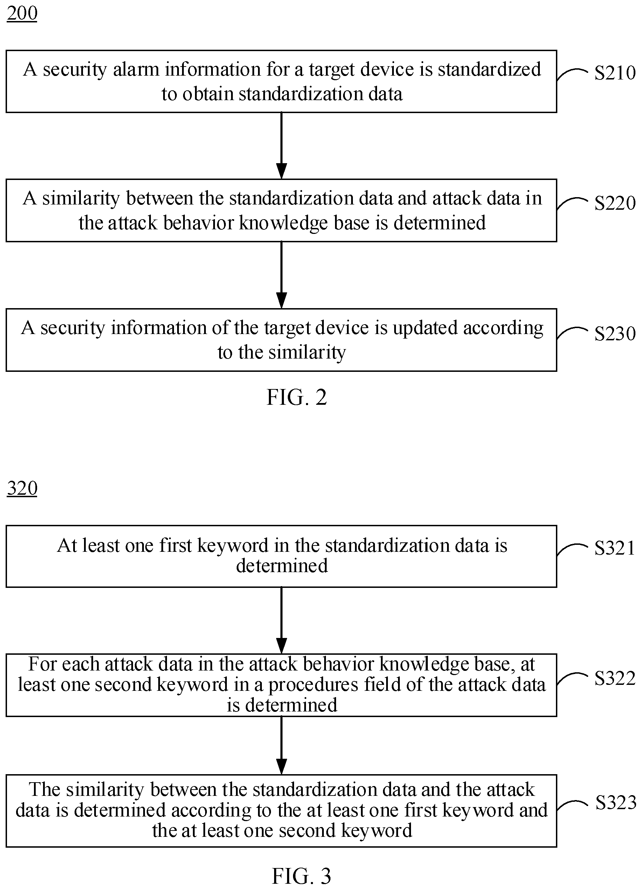

FIG. 2 schematically shows a flowchart of a method of processing security information according to the embodiments of the present disclosure.

As shown in FIG. 2, a method 200 of processing security information may include operations S210 to S230.

In operation S210, a security alarm information for a target device is standardized to obtain standardization data.

Then, in operation S220, a similarity between the standardization data and attack data in the attack behavior knowledge base is determined.

In operation S230, a security information of the target device is updated according to the similarity.

According to the embodiments of the present disclosure, the security data probe may be deployed in the terminal device in advance. Therefore, a security alarm information of the corresponding terminal device may be collected by the security data probe deployed in each terminal device, and then uploaded to the threat analysis platform. According to other embodiments of the present disclosure, the threat analysis platform may also access a third-party threat analysis platform to obtain a security alarm information from the third-party threat analysis platform.

According to the embodiments of the present disclosure, the security alarm information may be parsed to obtain at least one target field. Then the at least one target field is converted into a field in the standardization data according to a preset format. The preset format may include, for example, a Structured Threat Information expression (STIX). The STIX is a language configured to express relevance and coverage of an event, which may be used to express a structural network threat information.

According to the embodiments of the present disclosure, the attack data is data configured to describe the network attack, and may include, for example, a procedures field, a techniques field, and a tactics field, wherein the tactics field may be configured to describe why the attacker attacks, reflecting an attack intent of the attacker. A corresponding attack phase may be determined by the tactics field. For example, the tactics field may include initial access, execution, persistence, privilege escalation, defense evasion, credential access, discovery, lateral movement, collection, exfiltration, command and control, etc. Exemplarily, in this embodiment, each tactic may correspond to one or more techniques, and the techniques field may be configured to describe what the attacker has done to complete the tactic. In this embodiment, each technique may correspond to one or more procedures, and the procedures field may be configured to describe a procedure of the attack.

According to the embodiments of the present disclosure, the security information of the target device may reflect a security status of the target device, and updating the security information of the target device may help the user or an analysis system to extract and understand the attack intent of the attacker.

According to the embodiment of the present disclosure, the security information may include, for example, an attack chain. The attack chain may reflect an attack phase experienced by the device when being attacked. A form of the attack chain may take into account both machine readability and human readability. Based on this, when updating the security information, a tactics identifier corresponding to the tactics field in the target attack data may be added to the attack chain to update the attack chain.

For example, the standardization data contains a unique identifier of the device, and a current attack chain status of the device may be found through the unique identifier of the device. If the device has not been attacked before, the attack chain is empty. In this case, a current tactics identifier may be added as a data item to the attack chain. If the device has been attacked before, a current attack chain is not empty. In this case, the tactics identifier may be added to a tail of the attack chain, and the tactics identifier added during a previous attack may be set to point to the currently added tactics identifier in order to indicate a direction of the attack.

The method of processing security information according to the embodiments of the present disclosure may improve an efficiency of extracting effective threat behavior information from massive security alarm information, thereby improving an efficiency of discovering and responding to a security threat, so as to detect a behavior of the network security threat in time and response to the threat quickly.

The operation of determining the similarity between the standardization data and the attack data in the attack behavior knowledge base will be further described below combined with FIG. 3.

FIG. 3 schematically shows a flowchart of a method of determining the similarity between the standardization data and the attack data in the attack behavior knowledge base according to the embodiments of the present disclosure.

As shown in FIG. 3, a method 320 of determining the similarity between the standardization data and the attack data in the attack behavior knowledge base may, for example, include operations S321 to S323.

In operation S321, at least one first keyword in the standardization data is determined.

According to the embodiments of the present disclosure, the standardization data includes a field configured to describe the attack behavior, and a word segmentation processing may be performed on the field to obtain the at least one first keyword.

Then, in operation S322, for each attack data in the attack behavior knowledge base, at least one second keyword in a procedures field of the attack data is determined.

According to the embodiments of the present disclosure, word segmentation may be performed on the procedures field in the attack data to obtain the at least one second keyword.

In operation S323, the similarity between the standardization data and the attack data is determined according to the at least one first keyword and the at least one second keyword.

According to the embodiments of the present disclosure, the similarity between the standardization data and the attack data may be determined according to a similarity between the at least one first keyword and the at least one second keyword.

Exemplarily, in this embodiment, the at least one first keyword may be combined with the at least one second keyword to obtain a keyword set. Then a word frequency of each keyword of the keyword set in the standardization data is determined to obtain a first word frequency feature vector. A word frequency of each keyword of the keyword set in the attack data is determined to obtain a second word frequency feature vector. A cosine similarity between the first word frequency feature vector and the second word frequency feature vector is calculated as the similarity between the standardization data and the attack data.

For example, a field s1 configured to describe the attack behavior in the standardization data is "该攻击是针对网络服务器的 DDOS 攻击(This attack is a DDOS attack against a network server)". A procedures field s2 in the attack data is " 该攻击用于攻击 DDOS,目标是网络服务器(This attack is configured to attack DDOS, a target is a network server)".

Word segmentation is performed on the above-described s1 and s2, respectively, and the following word vectors S1 and S2 are obtained.

S1: [该 攻击 是 针对 网络服务器 的 DDOS 攻击]

S2: [该 攻击 用于 攻击 DDOS 目标 是 网络服务器 , ]

Then, all the words in the S1 and the S2 are counted. All the words appeared in the S1 and the S2 are deduplicated and merged, to obtain a keyword set as follows:

[该 攻击 是 用于 针对 网络服务器 目标 的 DDOS , ]

For each keyword in the above keyword set, a frequency of occurrence of each keyword in the S1 and the S2 is determined respectively, and following word frequency feature vectors A and B are obtained. Each element in the word frequency feature vector represents a frequency of occurrence of a corresponding keyword in the word vector.

A: [1 2 1 0 1 1 0 1 1 0]
B: [1 2 1 1 0 1 1 0 1 1]

Next, a cosine similarity between A and B may be calculated according to the following formula.

$$\text{similarity} = \cos(\theta) = \frac{A \cdot B}{\|A\|\|B\|} = \frac{\sum_{i=1}^{n} A_i \times B_i}{\sqrt{\sum_{i=1}^{n}(A_i)^2} \times \sqrt{\sum_{i=1}^{n}(B_i)^2}}$$

where *similarity* is the cosine similarity between A and B, $\theta$ is an angle between the A and the B, $A_i$ is an ith element in A, $B_i$ is an ith element in B, and *n* is a total number of elements in A (or B). In this embodiment, a range of the cosine similarity is in [-1, 1]. The cosine similarity between two vectors being closer to 1 indicates a greater similarity between the two vectors is.

According to the embodiments of the present disclosure, after determining the similarity, a target attack data with the greatest similarity to the standardization data may be determined in the attack behavior knowledge base. Then, the security information of the target device is updated according to the target attack data in response to the similarity of the target attack data being greater than a similarity threshold. The similarity threshold may be set as desired in practice, and a specific value of the similarity threshold is not specifically limited in the present disclosure. Exemplarily, in this embodiment, the similarity threshold may be 0.5.

According to the embodiments of the present disclosure, by determining the similarity between the standardization data and the attack data in the attack behavior knowledge base, an attack data corresponding to the standardization data may be obtained, that is, information such as an attack method of the attacker, the attack intent of the attacker and the like may be obtained. Thus a security status of the device may be reflected more clearly and accurately.

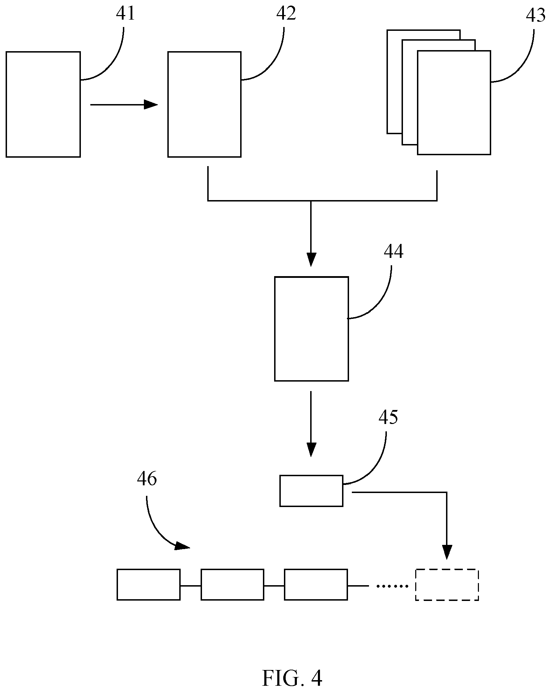

The method of processing security information shown above will be further described below with reference to FIG. 4 in conjunction with specific embodiments. Those skilled in the art may understand that the following exemplary embodiments are only for understanding the present disclosure, and the present disclosure is not limited thereto.

FIG. 4 schematically shows a schematic diagram of a method of processing security information according to the embodiments of the present disclosure. Exemplarily, in this embodiment, the method may be performed by the threat analysis platform.

As shown in FIG. 4, a security alarm information 41 of the corresponding terminal device is collected by the security data probe deployed in each terminal device, and then is uploaded to the threat analysis platform. In addition, the threat analysis platform may further directly access the third-party threat analysis platform to obtain the security alarm information 41.

After obtaining the security alarm information 41, the threat analysis platform may perform data standardization on the security alarm information 41 according to a STIX format to obtain a standardization data 42. It may be understood that, if the obtained security alarm information 41 is already in the STIX format, data standardization is not required.

A target field used to describe the attack behavior in the standardization data 42 is then matched with a procedures field of a plurality of attack data 43 in an ATT&CK knowledge base. A similarity between the target field and the procedures field in each attack data is calculated to obtain a similarity between the target field and each procedures field. For a procedures field with a highest similarity among all the procedures fields, it is determined whether the similarity is greater than the similarity threshold. If the similarity is greater than the similarity threshold, a techniques field to which the procedures field belongs is determined, and then a tactics field to which the techniques field belongs is determined, thereby obtaining a target attack data 44.

After the target attack data 44 is obtained, a tactics identifier 45 of the target attack data may be obtained, an attack chain 46 corresponding to the device may be obtained, and then the tactics identifier 45 may be added to an original attack chain 46 of the device. Exemplarily, in this embodiment, the original attack chain 46 of the device is not empty. Accordingly, the tactics identifier 45 may be added to a tail of the attack chain 46, and the tactics identifier added during the previous attack may be set to point to the currently added tactics identifier to indicate the direction of the attack.

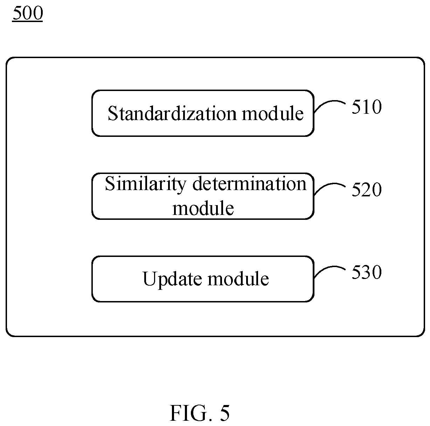

FIG. 5 schematically shows a block diagram of an apparatus of processing security information according to the embodiments of the present disclosure.

As shown in FIG. 5, an apparatus 500 of processing security information includes a standardization module 510, a similarity determination module 520 and an update module 530.

The standardization module 510 may be configured to standardize the security alarm information for the target device to obtain the standardization data;

The similarity determination module 520 may be configured to determine the similarity between the standardization data and the attack data in the attack behavior knowledge base.

The update module 530 may be configured to update the security information of the target device according to the similarity.

According to the embodiments of the present disclosure, the standardization module may include a parsing sub-module and a conversion sub-module. The parsing sub-module may be configured to parse the security alarm information to determine the at least one target field. The conversion sub-module may be configured to convert the at least one target field into the field in the standardization data according to the preset format.

According to the embodiments of the present disclosure, the preset format may include the STIX.

According to the embodiments of the present disclosure, the similarity determination module may include a first determination sub-module, a second determination sub-module, and a third determination sub-module. The first determination sub-module may be configured to determine the at least one first keyword in the standardization data. The second determination sub-module may be configured to determine the at least one second keyword in the attack data for each attack data in the attack behavior knowledge base. The third determination sub-module may be configured to determine the similarity between the standardization data and the attack data according to the at least one first keyword and the at least one second keyword.

According to the embodiments of the present disclosure, the third determination sub-module may include a combination unit, a first determination unit, a second determination unit and a calculation unit. The combination unit may be configured to combine the at least one first keyword with the at least one second keyword to obtain the keyword set. The first determination unit may be configured to determine the word frequency of each keyword of the keyword set in the standardization data to obtain the first word frequency feature vector. The second determination unit may be configured to determine the word frequency of each keyword of the keyword set in the attack data to obtain the second word frequency feature vector. The calculation unit may be configured to calculate the cosine similarity between the first word frequency feature vector and the second word frequency feature vector as the similarity between the standardization data and the attack data.

According to the embodiments of the present disclosure, the update module may include a fourth determination sub-module and an update sub-module. The fourth determination sub-module may be configured to determine, in the attack behavior knowledge base, the target attack data with the greatest similarity to the standardization data. The update sub-module may be configured to update the security information of the target device according to the target attack data in response to the similarity of the target attack data being greater than the similarity threshold.

According to the embodiments of the present disclosure, the attack data may include the tactics field, and the security information includes the attack chain.

According to the embodiments of the present disclosure, the update sub-module includes an addition unit, which may be configured to add the tactics identifier corresponding to the tactics field in the target attack data to the attack chain.

It should be noted that, collecting, storing, using, processing, transmitting, providing, and disclosing etc. of the personal information of the user involved in the present disclosure all comply with the relevant laws and regulations, are protected by essential security measures, and do not violate the public order and morals. According to the present disclosure, personal information of the user is acquired or collected after such acquirement or collection is authorized or permitted by the user.

According to the embodiments of the present disclosure, the present disclosure further provides an electronic device, a readable storage medium and a computer program product.

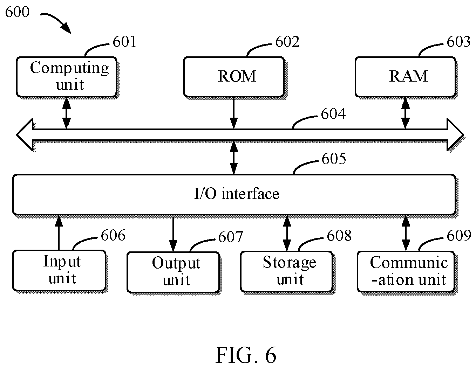

FIG. 6 schematically shows a schematic block diagram of an exemplary electronic device 600 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the device 600 may include a computing unit 601, which may perform various appropriate actions and processing based on a computer program stored in a read-only memory (ROM) 602 or a computer program loaded from a storage unit 608 into a random access memory (RAM) 603. Various programs and data required for the operation of the electronic device 600 may be stored in the RAM 603. The computing unit 601, the ROM 602 and the RAM 603 are connected to each other through a bus 604. An input/output (I/O) interface 605 is further connected to the bus 604.

Various components in the device 600, including an input unit 606 such as a keyboard, a mouse, etc., an output unit 607 such as various types of displays, speakers, etc., a storage unit 608 such as a magnetic disk, an optical disk, etc., and a communication unit 609 such as a network card, a modem, a wireless communication transceiver, etc., are connected to the I/O interface 605. The communication unit 609 allows the device 600 to exchange information/data with other devices through a computer network such as the Internet and/or various telecommunication networks.

The computing unit 601 may be various general-purpose and/or special-purpose processing components with processing and computing capabilities. Some examples of the computing unit 601 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 601 may perform the various methods and processes described above, such as the method of processing security information. For example, in some embodiments, the method of processing security information may be implemented as a computer software program that is tangibly contained on a machine-readable medium, such as the storage unit 608. In some embodiments, part or all of a computer program may be loaded and/or installed on the electronic device 600 via the ROM 602 and/or the communication unit 609. When the computer program is loaded into the RAM 603 and executed by the computing unit 601, one or more steps of the method of processing security information described above may be performed. Alternatively, in other embodiments, the computing unit 601 may be configured to perform the method of processing security information in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a special-purpose or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

**Claims**

1. A method (200) of processing security information, comprising:

standardizing (S210) a security alarm information for a target device to obtain standardization data;
determining (S220) a similarity between the standardization data and attack data in an attack behavior knowledge base; and
updating (S230) a security information of the target device according to the similarity;
wherein the determining a similarity between the standardization data and attack data in an attack behavior knowledge base comprises: determining (S321) at least one first keyword in the standardization data; and for each attack data in the attack behavior knowledge base, determining (S322) at least one second keyword in the attack data, and determining (S323) the similarity between the standardization data and the attack data according to the at least one first keyword and the at least one second keyword;

wherein the determining the similarity between the standardization data and the attack data according to the at least one first keyword and the at least one second keyword comprises: combining the at least one first keyword with the at least one second keyword to obtain a keyword set; determining a word frequency of each keyword of the keyword set in the standardization data to obtain a first word frequency feature vector; determining a word frequency of each keyword of the keyword set in the attack data to obtain a second word frequency feature vector; and calculating a cosine similarity between the first word frequency feature vector and the second word frequency feature vector as the similarity between the standardization data and the attack data.

2. The method according to claim 1, wherein the standardizing a security alarm information for a target device to obtain standardization data comprises:

parsing the security alarm information to determine at least one target field; and
converting the at least one target field into a field in the standardization data according to a preset format.

3. The method according to claim 2, wherein the preset format comprises a structured threat information expression.

4. The method according to claim 1, wherein the updating a security information of the target device according to the similarity comprises:

determining, in the attack behavior knowledge base, a target attack data with the greatest similarity to the standardization data; and
updating the security information of the target device according to the target attack data in response to the similarity of the target attack data being greater than a similarity threshold.

5. The method according to claim 4, wherein the attack data comprises a tactics field, the security information comprises an attack chain, and the updating the security information of the target device according to the target attack data comprises:
adding a tactics identifier (45) corresponding to the tactics field in the target attack data to the attack chain (46).

6. An electronic device (600), comprising:

at least one processor (601); and
a memory (608) communicatively connected to the at least one processor (601), wherein the memory (608) stores instructions executable by the at least one processor (601), and the instructions, when executed by the at least one processor (601), cause the at least one processor (601) to execute the method of any one of claims 1 to 5.

7. A non-transitory computer-readable storage medium having computer instructions stored thereon, wherein the computer instructions are configured to cause a computer to execute the method of any one of claims 1 to 5.

**Patentansprüche**

1. Verfahren (200) zum Verarbeiten von Sicherheitsinformationen, das Folgendes umfasst:

Standardisieren (S210) von Sicherheitsalarminformationen für eine Zielvorrichtung, um Standardisierungsdaten zu erhalten;
Bestimmen (S220) einer Ähnlichkeit zwischen den Standardisierungsdaten und Angriffsdaten in einer Angriffsverhaltenswissensbasis und
Aktualisieren (S230) von Sicherheitsinformationen der Zielvorrichtung gemäß der Ähnlichkeit;
wobei das Bestimmen einer Ähnlichkeit zwischen den Standardisierungsdaten und den Angriffsdaten in einer Angriffsverhaltenswissensbasis Folgendes umfasst:

Bestimmen (S321) von mindestens einem ersten Schlüsselwort in den Standardisierungsdaten und, für alle Angriffsdaten in der Angriffsverhaltenswissensbasis, Bestimmen (S322) von mindestens einem zweiten Schlüsselwort in den Angriffsdaten und Bestimmen (S323) der Ähnlichkeit zwischen den Standardisierungsdaten und den Angriffsdaten gemäß dem mindestens einen ersten Schlüsselwort und dem mindestens einen zweiten Schlüsselwort;

wobei das Bestimmen der Ähnlichkeit zwischen den Standardisierungsdaten und den Angriffsdaten gemäß dem mindestens einen ersten Schlüsselwort und dem mindestens einen zweiten Schlüsselwort Folgendes umfasst:

Kombinieren des mindestens einen ersten Schlüsselworts mit dem mindestens einen zweiten Schlüsselwort, um einen Schlüsselwortsatz zu erhalten; Bestimmen einer Worthäufigkeit von jedem Schlüsselwort des Schlüsselwortsatzes in den Standardisierungsdaten, um einen ersten Worthäufigkeitsmerkmalsvektor zu erhalten;

Bestimmen einer Worthäufigkeit von jedem Schlüsselwort des Schlüsselwortsatzes in den Angriffsdaten, um einen zweiten Worthäufigkeitsmerkmalsvektor zu erhalten; und

Berechnen einer Kosinusähnlichkeit zwischen dem ersten Worthäufigkeitsmerkmalsvektor und dem zweiten Worthäufigkeitsmerkmalsvektor als die Ähnlichkeit zwischen den Standardisierungsdaten und den Angriffsdaten.

2. Verfahren nach Anspruch 1, wobei das Standardisieren von Sicherheitsalarminformationen für eine Zielvorrichtung, um Standardisierungsdaten zu erhalten, Folgendes umfasst:

Parsen der Sicherheitsalarminformationen, um mindestens ein Zielfeld zu bestimmen; und

Umwandeln des mindestens einen Zielfeldes gemäß einem voreingestellten Format in ein Feld in den Standardisierungsdaten.

3. Verfahren nach Anspruch 2, wobei das voreingestellte Format einen strukturierten Bedrohungsinformationsausdruck umfasst.

4. Verfahren nach Anspruch 1, wobei das Aktualisieren von Sicherheitsinformationen der Zielvorrichtung gemäß der Ähnlichkeit Folgendes umfasst:

Bestimmen von Zielangriffsdaten mit der größten Ähnlichkeit mit den Standardisierungsdaten in der Angriffsverhaltenswissensbasis und

Aktualisieren der Sicherheitsinformationen der Zielvorrichtung gemäß den Zielangriffsdaten in Reaktion darauf, dass die Ähnlichkeit der Zielangriffsdaten größer ist als ein Ähnlichkeitsschwellwert.

5. Verfahren nach Anspruch 4, wobei die Angriffsdaten ein Taktikfeld umfassen, die Sicherheitsinformationen eine Angriffskette umfassen und das Aktualisieren der Sicherheitsinformationen der Zielvorrichtung gemäß den Zielangriffsdaten Folgendes umfasst:

Hinzufügen einer Taktikkennung (45), die dem Taktikfeld in den Zielangriffsdaten entspricht, zur Angriffskette (46) .

6. Elektronische Vorrichtung (600), die Folgendes umfasst:

mindestens einen Prozessor (601) und

einen Speicher (608), der kommunikativ mit dem mindestens einen Prozessor (601) verbunden ist, wobei im Speicher (608) Anweisungen gespeichert sind, die von dem mindestens einen Prozessor (601) ausführbar sind, und die Anweisungen, wenn sie von dem mindestens einen Prozessor (601) ausgeführt werden, den mindestens einen Prozessor (601) veranlassen, das Verfahren von einem der Ansprüche 1 bis 5 auszuführen.

7. Nichttransitorisches computerlesbares Speichermedium, auf dem Computeranweisungen gespeichert sind, wobei die Computeranweisungen dazu ausgelegt sind, einen Computer zu veranlassen, das Verfahren von einem der Ansprüche 1 bis 5 auszuführen.

## Revendications

1. Procédé (200) de traitement d'informations de sécurité, le procédé comprenant les étapes suivantes :

normaliser (S210) des informations d'alarme de sécurité pour un dispositif cible afin d'obtenir des données de normalisation ;

déterminer (S220) une similitude entre les données de normalisation et les données d'attaque dans une base de connaissances de comportement d'attaque ; et

mettre à jour (S230) les informations de sécurité du dispositif cible en fonction de la similitude ;

la détermination d'une similitude entre les données de normalisation et les données d'attaque dans une base de connaissances de comportement d'attaque comprenant les étapes suivantes : déterminer (S321) au moins un premier mot clé dans les données de normalisation ; et, pour chaque donnée d'attaque dans la base de connaissances de comportement d'attaque, déterminer (S322) au moins un deuxième mot clé dans les données d'attaque, et déterminer (S323) la similitude entre les données de normalisation et les données d'attaque en fonction d'au moins un premier mot clé et d'au moins un deuxième mot clé ;

la détermination de la similitude entre les données de normalisation et les données d'attaque en fonction de l'au moins un premier mot-clé et de l'au moins un deuxième mot-clé comprenant les étapes suivantes : combiner l'au moins un premier mot-clé avec l'au moins un deuxième mot-clé pour obtenir un ensemble de mots-clés ; déterminer la fréquence des mots de chaque mot-clé de l'ensemble de mots-clés dans les données de normalisation pour obtenir un premier vecteur de fréquence des mots ; déterminer la fréquence des mots de chaque mot-clé de l'ensemble de mots-clés dans les données d'attaque pour obtenir un deuxième vecteur de fréquence des mots ; et calculer une similitude en cosinus entre le premier vecteur de fréquence des mots et le deuxième vecteur de fréquence des mots comme étant la similitude entre les données de normalisation et les données d'attaque.

2. Procédé selon la revendication 1, dans lequel la normalisation d'informations d'alarme de sécurité pour un dispositif cible pour obtenir des données de normalisation comprend les étapes suivantes :

analyser les informations d'alarme de sécurité pour déterminer au moins un champ cible ; et

convertir l'au moins un champ cible en un champ dans les données de normalisation selon un format prédéfini.

3. Procédé selon la revendication 2, dans lequel le format prédéfini comprend une expression structurée d'informations de menace.

4. Procédé selon la revendication 1, dans lequel la mise à jour d'informations de sécurité du dispositif cible selon la similitude comprend les étapes suivantes :

déterminer, dans la base de connaissances des comportements d'attaque, des données d'attaque cibles présentant la plus grande similitude avec les données de normalisation ; et

mettre à jour les informations de sécurité du dispositif cible en fonction des données d'attaque cibles en réponse à la similitude des données d'attaque cibles qui est supérieure à un seuil de similitude.

5. Procédé selon la revendication 4, dans lequel les données d'attaque comprennent un champ de tactique, les informations de sécurité comprennent une chaîne d'attaque, et la mise à jour des informations de sécurité du dispositif cible en fonction des données d'attaque cible comprend l'étape suivante :

ajouter, à la chaîne d'attaque (46), un identificateur de tactique (45) correspondant au champ de tactique dans les données d'attaque cibles.

6. Dispositif électronique (600) comprenant :

au moins un processeur (601) ; et

une mémoire (608) connectée de manière communicative à l'au moins un processeur (601), la mémoire (608) stockant des instructions exécutables par l'au moins un processeur (601), et les instructions, lorsqu'elles sont exécutées par l'au moins un processeur (601), amenant l'au moins un processeur (601) à exécuter le procédé de l'une quelconque des revendications 1 à 5.

7. Support de stockage non transitoire lisible par ordinateur sur lequel sont stockées des instructions informatiques, les instructions informatiques étant configurées pour amener un ordinateur à exécuter le procédé de l'une quelconque des revendications 1 à 5.

<u>100</u>

Terminal
device

103

Terminal
device

102

Terminal
device

101

104

105

106

FIG. 1

200

| A security alarm information for a target device is standardized to obtain standardization data | S210 |

↓

| A similarity between the standardization data and attack data in the attack behavior knowledge base is determined | S220 |

↓

| A security information of the target device is updated according to the similarity | S230 |

FIG. 2

320

| At least one first keyword in the standardization data is determined | S321 |

↓

| For each attack data in the attack behavior knowledge base, at least one second keyword in a procedures field of the attack data is determined | S322 |

↓

| The similarity between the standardization data and the attack data is determined according to the at least one first keyword and the at least one second keyword | S323 |

FIG. 3

FIG. 4

500

Standardization module — 510

Similarity determination module — 520

Update module — 530

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3820115 A2

**Non-patent literature cited in the description**

- Clustering Using a Similarity Measure Approach Based on Semantic Analysis of Adversary Behaviors. **WAI\IG WENHAO et al.** 2020 IEEE FIFTH INTERNATIONAL CONFERENCE ON OATA SCIENCE IN CYBERSPACE (OSC). IEEE, 27 July 2020, 1-7